Europäisches Patentamt

European Patent Office

Office européen des brevets

(11) Publication number: **0 493 791 A1**

# EUROPEAN PATENT APPLICATION

(21) Application number: **91122225.5**

(22) Date of filing: **24.12.91**

(51) Int. Cl.5: **C08L 83/04**, C08K 5/09

(30) Priority: **25.12.90 JP 414252/90**

(43) Date of publication of application:
**08.07.92 Bulletin 92/28**

(84) Designated Contracting States:
**BE DE FR GB**

(71) Applicant: **Dow Corning Toray Silicone Company, Limited**
**Mitsui Bldg. No. 6, 2-3-16,**
**Nihonbashi-Muromachi, Chuo-Ku**
**Tokyo 103(JP)**

(72) Inventor: **Kasuya, Akira**
**6, 1-chome, Yushudai Nishi**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

(54) Curable organopolysiloxane composition exhibiting improved adhesion in the cured form.

(57) The adhesion to organic substrates of organosiloxane compositions that cure by a platinum catalyzed hydrosilylation reaction and contain a specified group of known organosilicon adhesion promoters is substantially improved when the compositions also contain a compound of tetravalent zirconium.

EP 0 493 791 A1

The present invention relates to an addition reaction-curing organopolysiloxane composition. More particularly, the present invention relates to a curable organopolysiloxane composition which is strongly self-bonding for organic resins.

Curable organopolysiloxane compositions which cure by a platinum-catalyzed addition reaction are widely used in industry because they exhibit a rapid curing reaction. Unfortunately, these addition reaction-curing organopolysiloxane compositions generally exhibit poor adhesion to substrates with which they are placed in contact during curing. This shortcoming has made it necessary to treat the substrate with a primer when the organosiloxane composition is employed as an adhesive. As a consequence, research has been conducted into the preparation of strongly self-bonding curable organopolysiloxane compositions based on the addition of various types of adhesion promoters.

As a rule these prior art curable organopolysiloxane compositions strongly adhere to substrates such as metals and glass, but adhere poorly if at all to organic resins.

Japanese Patent Application Laid Open [Kokai or Unexamined] Number 62-240361 [240,361/87] proposes a curable organopolysiloxane composition with an improved adhesion to organic resins. This curable organosiloxane composition comprises an organopolysiloxane containing silicon-bonded lower alkenyl radicals, an organohydrogenpolysiloxane, a platinum containing hydrosilylation catalyst, an organosilicon compound containing silicon-bonded ethylenically unsaturated groups and silicon-bonded alkoxy groups, and a compound of aluminum or zirconium.

With respect to the curable organopolysiloxane composition disclosed in published Japanese Patent Application Number 62-240361, its adhesion to organic resins is improved through the addition thereto of an aluminum or zirconium compound and an organosilicon compound containing Si-bonded unsaturated and alkoxy groups. Nevertheless, this composition still does not achieve a satisfactory level of adhesion to organic resins. In particular, this composition completely lacks cohesive bonding to organic resins which are relatively resistant to such bonding, for example, the polyphenylene sulfide resins which have recently become widely used in the electrical and electronic industries.

The present inventor conducted extensive investigations into curable organopolysiloxane compositions which would adhere strongly to organic resins such as polyphenylene sulfide resins.

The present invention is based on the discovery that the adhesion of cured organosiloxane compositions to organic resins such as polyphenylene sulfide resins can be substantially improved by including in the curable organosiloxane composition a particular type of zirconium compound and a particular type of organosilicon compound.

One objective of the present invention is to provide a curable organopolysiloxane composition which develops a strong adhesion to organic resins such as polyphenylene sulfide resins that the composition is in contact with during curing.

The objectives of the present invention are achieved by providing improved curable organosiloxane compositions comprising

(A) an organopolysiloxane containing at least two silicon-bonded alkenyl groups in each molecule,

(B) an organohydrogensiloxane containing at least two silicon-bonded hydrogen atoms in each molecule, the concentration of said organohydrogenpolysiloxane being equivalent to from 0.5 to 5 moles of silicon-bonded hydrogen atoms for each mole of silicon-bonded alkenyl radicals in ingredient A,

(C) a concentration of a platinum-containing hydrosilylation catalyst sufficient to promote curing of said composition, and

(E) from 0.01 to 10 weight percent, based on the combined weight of ingredients A and B of an organosilicon compound selected from the group comprising bis(trialkoxysilyl)alkanes, disilanes which contain silicon-bonded alkoxy groups, epoxy group-containing alkoxysilanes and siloxanes obtained by the partial hydrolysis of said alkoxysilanes.

The improvement that characterizes the compositions of this invention is the presence in the compositions of from 0.01 to 2 weight percent, based on the total weight of ingredients A and B, of a zirconium (IV) compound

The ingredients of the present curable organopolysiloxane compositions will be explained in greater detail in the following sections of this specification.

The organopolysiloxane comprising ingredient A is the main or principal ingredient of the present compositions. This ingredient is cured by a platinum-catalyzed addition reaction between the silicon-bonded alkenyl radicals of ingredient A and the silicon-bonded hydrogen atoms in ingredient B. The organopolysiloxane comprising ingredient A must contain at least two silicon-bonded alkenyl radicals in each molecule. When this ingredient contains fewer than two silicon-bonded alkenyl radicals in each molecule, the resultant organosiloxane composition cannot undergo a satisfactory cure.

The silicon-bonded alkenyl radicals in ingredient A are exemplified by but not limited to vinyl, allyl,

2

propenyl, butenyl, pentenyl, hexenyl, heptenyl, octenyl, nonenyl, and decenyl. The double bond in the alkenyl group is preferably located on the carbon atoms furthest from the silicon atom because this supports a rapid addition reaction. Other than the silicon-bonded alkenyl radicals, the silicon-bonded organic groups in ingredient A are exemplified by alkyl radicals such as methyl, ethyl, propyl, butyl, pentyl, and hexyl; aryl radicals such as phenyl, alkaryl radicals such as tolyl and xylyl; aralkyl radicals such as benzyl and phenethyl; and haloalkyl radicals such as trifluoropropyl and chloromethyl.

To achieve particularly good economics and adhesion of the curable organopolysiloxane composition during curing , it is preferred that methyl radicals comprise at least half of the silicon-bonded organic groups in ingredient A other than the silicon-bonded alkenyl radicals.

The molecular structure of ingredient A is not specifically restricted, and it may be any of straight chain, branched, cyclic, network, or three dimensional. The molecular weight of this ingredient likewise not specifically restricted. However, in order to achieve particularly good processability and adhesion for the curable organopolysiloxane composition, it is preferred that at least half of the organopolysiloxanes comprising ingredient A be straight chain or branched and that their viscosities at 25° C are within the range of 100 to 1,000,000 centipoise.

The organohydrogensiloxane comprising ingredient B is a crosslinker for the present compositions. This ingredient must contain at least two silicon-bonded hydrogen atoms in each molecule. When ingredient B contains fewer than two silicon-bonded hydrogen atoms in each molecule, the organopolysiloxane composition cannot undergo a satisfactory cure. The silicon-bonded organic groups in ingredient (B) are exemplified by alkyl radicals such as methyl, ethyl, propyl, butyl, pentyl, and hexyl; by aryl radicals such as phenyl, tolyl, and xylyl; by aralkyl radicals such as benzyl and phenethyl; and by haloalkyl radicals such as trifluoropropyl and chloromethyl.

In order to obtain particularly good economics and adhesion for the curable organopolysiloxane composition, it is preferred that at least half of the silicon-bonded organic groups in ingredient B are methyl.

Examples of ingredient B include but are not limited to:

trimethylsiloxy-terminated methylhydrogenpolysiloxanes,

trimethylsiloxy-terminated dimethylsiloxane-methylhydrogensiloxane copolymers,

dimethylhydrogensiloxy-terminated methylhydrogenpolysiloxanes,

dimethylhydrogensiloxy-terminated dimethylpolysiloxanes,

dimethylhydrogensiloxy-terminated dimethylsiloxane-methylhydrogensiloxane copolymers,

cyclic methylhydrogenpolysiloxanes,

cyclic dimethylsiloxane-methylhydrogensiloxane copolymers,

tetrakis(dimethylhydrogensiloxy)silane,

copolymers composed of $(CH_3)_2HSiO_{1/2}$, $(CH_3)_3SiO_{1/2}$, and $SiO_2$ units, and

copolymers composed of $(CH_3)_2HSiO_{1/2}$, $(CH_3)_3SiO_{1/2}$, $CH_3SiO_{3/2}$, and $(CH_3)_2SiO$ units.

Ingredient B should be added to the present curable organopolysiloxane compositions in an amount which provides from 0.5 to 5 moles of silicon-bonded hydrogen atoms for each mole of silicon-bonded alkenyl groups in ingredient A. The curable organopolysiloxane composition will not cure satisfactorily when it contains less than 0.5 moles silicon-bonded hydrogen atoms mole of silicon-bonded alkenyl radicals in ingredient A. When the curable composition contains more than 5 moles of silicon-bonded hydrogen atoms per mole of alkenyl radical, the resulting curable organosiloxane composition undergoes time-dependent variations in its hardness after curing.

The platinum-containing catalyst comprising ingredient C is a catalyst for the hydrosilylation reaction between the silicon-bonded hydrogen atoms of ingredient B and the silicon-bonded alkenyl radicals of ingredient A. This catalyst is exemplified by but not limited to platinum micropowders, platinum/asbestos, platinum/carbon, chloroplatinic acid and its alcohol solutions, platinum/olefin complexes, platinum/alkenylsiloxane complexes, platinum/beta-diketone complexes, and platinum/phosphine complexes.

The concentration of ingredient C in the present compositions is not specifically restricted and need merely correspond to catalytic quantities as typically employed. In concrete terms, the concentration of the catalyst, expressed as platinum metal, falls within the range of 1 ppm to 100 ppm by weight, based on the combined weight of ingredients A and B.

The characterizing feature of the present compositions is the presence of a zirconium (IV) compound, referred to as ingredient D. This ingredient interacts with the organosilicon compound referred to herein as ingredient E to impart a high level of adhesion to during curing of the present compositions.

Suitable zirconium compounds include but are not limited to zirconium tetracarboxylates, e. g., zirconium tetraacetate, zirconium tetrastearate, and zirconium tetra(2-ethylhexanoate), and by zirconium complexes such as zirconium acetylacetonate. The zirconium tetracarboxylates are preferred as ingredient D because they are particularly easy to handle and because curable organopolysiloxane composition

3

EP 0 493 791 A1

containing these zirconium compounds achieve particularly good adhesion to organic resins.

The method used to incorporate ingredient D into the present curable organopolysiloxane compositions is not particularly critical. However, because this ingredient is typically a solid at room temperature, the most preferred method consists of dissolving the zirconium compound in a solvent and blending the resultant solution with the other ingredients of the curable organopolysiloxane composition.

The solvent used to dissolve the zirconium compound is not critical. If the solvent must be removed from the curable composition, low-boiling solvents are then preferred. Such preferred solvents are exemplified by but not limited to ethers such as diethyl ether, the isomeric dipropyl ether, methyl ethyl ether, methyl propyl ether, and ethyl propyl ether; by aliphatic hydrocarbons such as pentane, hexane, heptane, octane, nonane, and decane; and by halogenated hydrocarbons such as chloroform and carbon tetrachloride.

Alternatively, the organosilicon compound comprising ingredient E can also be used as the solvent for the zirconium compound. The concentration of ingredient D in the present compositions should be from 0.01 to 2.0 weight percent, based on the combined weight of ingredients A and B. Concentrations of from 0.01 to 1.0 weight percent are preferred.

When the concentration of ingredient D is less than 0.01 weight percent based on the weight of the curable organopolysiloxane composition, the composition will not develop the desired adhesion to organic resins that it is in contact with during curing. When more than 2.0 weight percent of the organosilicon compound is added, the resulting curable organopolysiloxane composition will not cure properly.

Ingredient E is an organosilicon compound selected from the group consisting of bis(trialkoxysilyl)-alkanes, disilanes containing silicon-bonded alkoxy groups, epoxy-containing alkoxysilanes and siloxanes prepared by partial hydrolysis of these alkoxysilanes. Although these organosilicon compounds are often added to curable organosiloxane compositions as adhesion promoters, they typically do not achieve an acceptable degree of adhesion to organic substrates in the absence of the zirconium compound referred to as ingredient D of the present compositions.

The alkoxy radicals of the bis(trialkoxysilyl)alkanes, disilanes and epoxy-containing alkoxysilanes preferably contain from 1 to 4 carbon atoms, and are most preferably methoxy or ethoxy.

Examples of organosilicon compounds useful as ingredient E include but are not limited to:
bis(trialkoxysilyl)alkanes such as
bis(trimethoxysilyl)ethane,
bis(trimethoxysilyl)propane, and
bis(triethoxysilyl)ethane;
disilanes containing silicon-bonded alkoxy groups, such as
1,1,2,2-tetramethoxy-1,2-dimethyldisilane and
1,2-dimethoxy-1,1,2,2-tetramethyldisilane; and
epoxy-containing silanes such as
3-glycidoxypropyltrimethoxysilane,
3-glycidoxypropyltriethoxysilane, and
3,4-epoxycyclohexylethyltrimethoxysilane;and
the siloxanes produced by the partial hydrolysis-condensation of epoxy-containing silanes.

The concentration of ingredient E should be from 0.01 to about 10 weight percent, preferably from 0.1 to 5 weight percent, based on the combined weight of ingredients A and B. When the concentration of ingredient E is less than 0.01 weight percent based on the combined weights of ingredients A and B, the adhesion to organic resins developed during curing of the organosiloxane composition will be inadequate. When more than 10 weight percent of ingredient E is present, organosiloxane composition will not cure in a satisfactory manner.

The curable organosiloxane compositions of this invention are prepared by blending ingredients A through E to homogeneity. Various types of additional ingredients may also be present, based on the intended application of the cured composition. Examples of these optional ingredients additives include but are not limited to inorganic fillers such as dry-method silica, wet-method silica, natural silica, diatomaceous earth, silica balloons, calcium carbonate, carbon black, titanium dioxide, aluminum oxide, aluminum hydroxide, and zinc oxide; dyes and pigments; heat stabilizers; antioxidants; and flame retardants.

Acetylenic compounds, amine compounds, mercaptan compounds, and phosphorus compounds can added to control or adjust the curing rate of the organosiloxane composition. Nonreactive silicone oils may also be added in order to improve the physical properties of the uncured and/or cured composition.

The present curable compositions can be prepared using various types of kneading and/or mixing equipment, including but not limited to planetary mixers, kneader mixers, screw mixers, impeller mixers, static mixers, 2-roll mills, 3-roll mills, and twin-screw extruders.

4

The present compositions can be cured at room or elevated temperature. In order to obtain good adhesion of the cured material, it is preferred that the curable organopolysiloxane composition be heated at 70 to 200º C while in contact with the substrate.

As explained hereinbefore, the present organosiloxane compositions develop excellent adhesion to many types of substrates when they are cured while in contact with the particular substrate. The compositions bond to organic resins such as phenolic resins, epoxy resins, polyamide resins, unsaturated polyester resins, polyethylene terephthalate resins, polybutylene terephthalate resins, polycarbonate resins, polyacetal resins, and polyimide resins.

Of particular importance is that the present compositions bond well even to organic resins which are relatively intractable to bonding, such as the polyphenylene sulfide resins. The curable compositions may therefore be employed for such applications as the bonding, installation, insulating sealing, and coating of electrical and electronic components; the bonding, installation, and gap sealing of machine components and tools; and the bonding of fabrics and textiles.

EXAMPLES

The present invention will be further explained by means of illustrative examples. In these examples, the physical property values were measured at 25º C, and Me in the formulas denotes methyl.

The bond strengths of the samples prepared in Example 3 were measured quantitatively using the tensile shear adhesive strength test method described in JIS K 6850 (thickness of adhesive layer = 2 mm).

Adhesion was measured qualitatively as follows: the curable organopolysiloxane composition was cured on the particular substrate and the adhesion was inspected by peeling the cured product with a spatula. Good adhesion of the cured product to the substrate was scored as " + + ", partial delamination was scored as " + ", and complete delamination was scored as " x ".

Example 1

The following ingredients were mixed to homogeneity to give evaluation composition A:

100 parts by weight of a dimethylvinylsiloxy-terminated dimethylpolysiloxane (A1) with an average degree of polymerization of 300,

20 parts by weight of a fume type silica exhibiting a specific surface area of 200 m2/g, whose surface had been treated with hexamethyldisilazane,

a quantity of a chloroplatinic acid/tetramethyldivinyldisiloxane complex equivalent to 5 ppm platinum metal, based on the weight of dimethylpolysiloxane (A1),

1.3 parts by weight of an organopolysiloxane exhibiting the average formula $(Me_2HSiO_{1/2})_{10}(SiO_2)_6$, and 0.01 parts by weight of 3-methyl-1-butyn-3-ol.

Composition A was blended to homogeneity with 0.2 parts by weight of zirconium tetra(2-ethylhexanoate) and 2 parts by weight of hexamethoxydisilylethane to give a curable organosiloxane composition of the present invention. This curable composition was then applied to the substrates listed in Table 1 and cured in an oven at 150º C for 0.5 hours. The adhesion of the composition to the substrates were then evaluated, and the results of the evaluations are reported in Table 1.

For purposes of comparison, composition A was blended to homogeneity with 2 parts by weight of hexamethoxydisilylethane in the absence of a zirconium compound. The resultant curable is outside the scope of the present invention. The adhesion of this composition was evaluated as described in the preceding section of this example, and these results are also reported in Table 1.

Table 1

| Substrate | Adhesion | |
|---|---|---|
| | Present Invention | Comparision Example |
| Aluminum Sheet | + + | + + |
| Nickel Sheet | + + | + + |
| Epoxy Resin (Fiberglass Reinforced) | + + | + |
| Polybutylene Terephthalate Resin | + + | x |
| Nylon 6 Resin | + + | x |
| Polyphenylene Sulfide Resin | + + | x |
| Polycarbonate Resin | + + | x |

Example 2

Composition A described in Example 1 was blended to homogeneity with 0.2 parts by weight of zirconium tetra(2-ethylhexanoate) and 2 parts by weight of 1,1,2,2-tetramethoxy-1,2-dimethyldisilane to form a curable organosiloxane composition of the present invention. This curable composition was applied to the various substrates listed in Table 2, and cured, at which time the adhesion to these substrates was evaluated with the results reported in Table 2. The composition was cured in an oven at 150° C for 0.5 hours. For comparison, composition A described in Example 1 was blended to homogeneity with only the 2 weight parts 1,1,2,2-tetramethoxy-1,2-dimethyldisilane in the absence of a zirconium compound to yield a curable organopolysiloxane composition outside the scope of the present invention. This composition's adhesion was evaluated as described in Example 1, and these results are also reported in Table 2.

Table 2

| Substrate | Adhesion | |
|---|---|---|
| | Present Invention | Comparision Example |
| Aluminum Sheet | + + | + + |
| Nickel sheet | + | + |
| Epoxy Resin (Fiberglass Reinforced) | + + | + |
| Polybutylene Terephthalate Resin | + + | + |
| Nylon 6 Resin | + + | + |
| Polyphenylene Sulfide Resin | + + | x |
| Polycarbonate Resin | + + | x |

Example 3

The following ingredients were blended to homogeneity to prepare composition B:
100 parts by weight of a dimethylvinylsiloxy-terminated dimethylpolysiloxane (A2) with an average degree of polymerization of 300,
20 parts by weight of fume silica with a specific surface area of 200 m2/g; the surface of the silica particles had been treated with hexamethyldisilazane, a quantity of chloroplatinic acid/tetramethyldivinyldisiloxane complex equivalent to 5 ppm platinum metal based on weight of dimethylpolysiloxane A2,
1.8 parts by weight of a trimethylsiloxy-terminated methylhydrogensiloxane/dimethylsiloxane copolymer exhibiting an average degree of polymerization 10 and containing an average of 5 silicon-bonded hydrogens per molecule, and 0.01 parts by weight of 3-methyl-1-butyn-3-ol.
Composition B was mixed to homogeneity with 0.4 weight parts of a 50 weight percent hexane solution of zirconium tetra(2-ethylhexanoate) and 2 weight parts 3-glycidoxypropyltrimethoxysilane to yield a curable organopolysiloxane composition of the present invention. This curable composition was applied to the substrates listed in Table 3, and cured for one hour in an oven maintained at a temperature of 120° C. The composition's adhesion to these substrates was then measured using the tensile shear adhesive strength test method described in JIS K 6850 (thickness of adhesive layer = 2 mm). and the results of this evaluation are reported in Table 3.

For purposes of comparison, composition B was blended to homogeneity with only 2 weight parts 3-glycidoxypropyl-trimethoxysilane and no zirconium compound to yield a curable organopolysiloxane composition outside the scope of the present invention. The adhesion of this composition to the various substrates was also measured using the procedure described in JIS K 2850 these results are reported in Table 3.

Table 3

| Substrate | adhesion strength (kgf/cm2) | |
|---|---|---|
| | Present Invention | Comparision Example |
| iron sheet | 30 | 30 |
| nickel sheet | 20 | 14 |
| epoxy resin (glass fiber reinforced) | 25 | 0 |
| polybutylene terephthalate resin | 29 | 11 |
| nylon 6 resin | 15 | 14 |
| polyphenylene sulfide resin | 23 | 0 |

Example 4

Composition A described in example 1 was blended to homogeneity with 0.2 parts by weight of zirconium tetra(2-ethylhexanoate) and 2 parts by weight of 3-glycidoxypropyltrimethoxysilane to give a curable organopolysiloxane composition of the present invention. This composition was applied to the substrates listed in Table 4, and the composition's adhesion was then evaluated with the results reported in Table 4. The composition was cured in an oven at 150_C for 0.5 hours. For purposes of comparison, composition A was mixed to blended to homogeneity with only 2 parts by weight of 3-glycidoxypropyl-trimethoxysilane and no zirconium compound to yield curable organopolysiloxane composition outside the scope of the present invention. The adhesion of this composition was also evaluated and the results reported in Table 4.

Table 4

| Substrate | Adhesion | |
|---|---|---|
| | Present Invention | Comparision Example |
| aluminum sheet | + + | + |
| nickel sheet | + + | + |
| epoxy resin (glass fiber reinforced) | + + | x |
| polybutylene terephthalate resin | + + | x |
| nylon 6 resin | + + | x |
| polyphenylene sulfide resin | + + | x |
| polycarbonate resin | + + | x |

Claims

1. In an improved curable organopolysiloxane composition comprising
(A) an organopolysiloxane containing at least 2 silicon-bonded alkenyl radicals groups in each molecule,
(B) an organohydrogensiloxane containing at least 2 silicon-bonded hydrogen atoms in each molecule, where the concentration of said organohydrogenpolysiloxane is equivalent to from 0.5 to 5 moles of silicon-bonded hydrogen atoms per mole of silicon-bonded alkenyl radicals present in said organopolysiloxane,
(C) a platinum-containing hydrosilylation catalyst, and
(E) an organosilicon compound selected from the group consisting of bis(trialkoxysilyl)alkanes, disilanes containing silicon-bonded alkoxy groups, epoxy group-containing alkoxysilanes and siloxanes prepared by the partial hydrolysis of said alkoxysilanes, where the concentration of ingredient E is equivalent to from 0.01 to 10 weight percent, based on the combined weight of ingredients A and B,

the improvement comprising the presence in said composition of
(D) a zirconium (IV) compound in an amount equivalent to from 0.01 to 2.0 weight percent, based on the combined weight of ingredients A and B.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | EP-A-0 245 948 (TORAY SILICONE) * Pages 8-10; claims 1,3,6 * & JP-A-62 240 361 (Cat. D) | 1 | C 08 L 83/04 C 08 K 5/09 |
| Y | FR-A-2 511 384 (RHONE-POULENC) * Page 7, line 31; page 9, lines 20-22; claims 2,9 * | 1 | |
| Y | EP-A-0 204 526 (XEROX CORP.) * Column 8, lines 28-37; column 12, lines 5-6; claim 1 * | 1 | |
| Y | US-A-4 737 562 (CHAUDHURY et al.) * Column 6, lines 61-64; column 10, line 67 - column 11, line 2; claim 1 * | 1 | |

TECHNICAL FIELDS SEARCHED (Int. Cl.5)

C 08 K
C 08 L
C 09 D

The present search report has been drawn up for all claims

| Place of search | Date of completion of the search | Examiner |
|---|---|---|
| THE HAGUE | 02-04-1992 | LENTZ J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document